# EUROPEAN PATENT APPLICATION

(11) **EP 2 961 016 A1**
(43) Date of publication of application: **30.12.2015**
(21) Application number: 14174201.5
(22) Date of filing: 26.06.2014
(51) Int. Cl.: H02G 5/00

(54) **Conductor for an installation for power distribution and switchgear assembly**

(71) Applicant: ABB AG, 68309 Mannheim (DE)
(72) Inventor: Kreichgauer, Sven, 64668 Rimbach (DE); Vitek, Libor, 619 00 Brno (CZ)

(57) **Abstract**

The invention relates to a conductor which minimizes the disadvantages of the skin effect, a conductor (1a, 1c) comprising at least one inner region (3a, 3c), at least two outer regions (4a, 4c, 5a, 5c) and a plurality of busbars (2a, 2c, 6a, 6c) for conducting alternating current, which busbars in each case comprise an electrically conductive material, wherein at least one central busbar (2a, 2c) is arranged in the inner region (3a, 3c) and at least one outer busbar (6a, 6c) is arranged in each case in the outer regions (4a, 4c, 5a, 5c), is characterized in that the geometry of the cross-sectional area of at least one outer busbar (6a, 6c) is different from the geometry of the cross-sectional area of a central busbar (2a, 2c) .Furthermore, a switchgear assembly comprising at least one such conductor is proposed.

## Description

The invention relates to a conductor, in particular for a low voltage or medium voltage switchgear, comprising at least one inner region, at least two outer regions and a plurality of busbars for conducting alternating current, which busbars in each case comprise an electrically conductive material, wherein at least one central busbar is arranged in the inner region and at least one outer busbar is arranged in each case in the outer regions. Furthermore, the invention relates to a switchgear assembly comprising at least one such conductor.

Conductors which are used in the field of electrical power distribution are already known. In particular, conductors which are used in the low-voltage range for AC distribution are already known.

As soon as an alternating current flows through a conductor, the electrical resistance in the interior of the conductor increases. This results in the majority of the current being conducted through the outer part of the conductor.

This effect is known as the skin effect. In conductors through which relatively high-frequency alternating current flows, the current density in the interior is lower than in the outer regions of said conductors. The skin effect increases the resistance per unit length of an electrical conductor, namely the electrical resistance per unit length of the conductor.

The invention is therefore based on the object of specifying a conductor which minimizes the disadvantages of the skin effect.

According to the invention, the abovementioned object is achieved by means of a conductor having the features of Patent Claim 1.

Accordingly, the conductor mentioned at the outset is characterized in that the geometry of the cross-sectional area of at least one outer busbar is different from the geometry of the cross-sectional area of a central busbar.

It has been recognized according to the invention that the consequences of the skin effect depend on the geometry and the arrangement of the busbars of the conductor. By suitably selecting the geometry of the busbars, the amount of inner conductive material can be reduced in the case of the conductor according to the invention. The outer conductive material is suitably shaped according to the invention such that the current density distribution is optimized. Owing to the optimization of the current density distribution, less conductive material needs to be used in order to generate at least the same current flow as in conductors which are already known. To this extent, a conductor which minimizes the disadvantages of the skin effect is specified.

Consequently, the object stated at the outset is achieved.

Advantageously, less conductive material is present in the inner region than in the outer regions. As a result of this, savings can be made on expensive conductive material such as copper.

Against this background, the conductive material is advantageously copper, wherein the outer busbars and the central busbar are manufactured from copper. As a result of this, the conductor is manufactured from the same material with respect to the conductive material.

In a further embodiment at least one outer busbar is configured to be L-shaped in cross section. Said geometric configuration lends increased stiffness to the conductor than an accumulation of known busbars. This has the advantage that the conductor requires a support apparatus which is less complex in terms of design.

Advantageously, in a further refinement, in each case two outer busbars are arranged in at least one outer region, said outer busbars being in each case configured to be L-shaped in cross section and lying on and/or in one another such that together they form an L. As a result of this, a particularly high degree of stability is conferred on the conductor.

Against this background, further advantageously in each case two outer busbars are arranged in two outer regions, said outer busbars being in each case configured to be L-shaped in cross section and lying on and/or in one another such that together they form an L. As a result of this, the conductor has a very high degree of stability on two outer sides.

in a further embodiment, the central busbar is configured to be rectangular in cross section. A central busbar such as this can be manufactured and fitted easily.

Further advantageously, two central busbars are arranged in the inner region. As a result of this, the conductor can also be used at very high currents of or up to approximately 5000 A.

Furthermore, a switchgear assembly, in particular a low voltage or medium voltage switchgear is proposed having at least one conductor, as described above, comprising at least one inner region, at least two outer regions and a plurality of busbars for conducting alternating current, which busbars in each case comprise an electrically conductive material, wherein at least one central busbar is arranged in the inner region and at least one outer busbar is arranged in each case in the outer regions and wherein the geometry of the cross-sectional area of at least one outer busbar is different from the geometry of the cross-sectional area of a central busbar.

In the drawings:
- figure 1: shows a conductor from the prior art which comprises four busbars having a rectangular cross-sectional area in each case,
- figure 2: shows a graph illustrating the current density distribution within the conductor shown in figure 1,
- figure 3: shows a conductor according to the invention which comprises four outer busbars having a cross-sectional area which is L-shaped in cross section and having a centrally arranged central busbar having a rectangular cross-sectional area,
- figure 4: shows a graph illustrating the current density distribution within an L-shaped subconductor as shown in figure 3, said subconductor being formed by two outer busbars,
- figure 5: shows a conductor from the prior art which comprises six busbars having a rectangular cross-sectional area in each case,
- figure 6: shows a graph illustrating the current density distribution within the conductor shown in figure 5,
- figure 7: shows a conductor according to the invention which comprises four outer busbars having a cross-sectional area which is L-shaped in cross section and having two centrally arranged central busbars having a rectangular cross-sectional area in each case, and
- figure 8: shows a graph illustrating the current density distribution within an L-shaped subconductor as shown in figure 7, said subconductor being formed by two outer busbars.

For interrupters at a current of 3200 A, conductors 1 which comprise four busbars 2 are used at present.

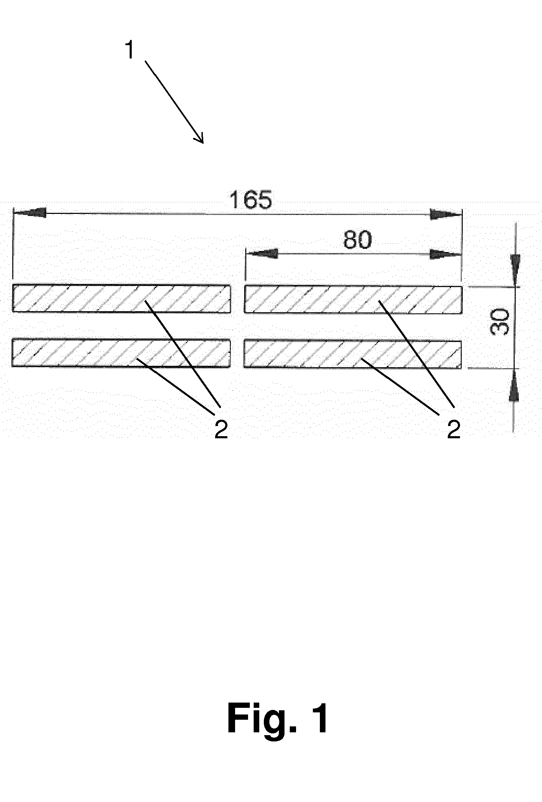

Figure 1 shows such a conductor 1 having four busbars 2 and providing a total cross-sectional area of 3200 mm² for the current flow. Four busbars 2 are arranged, each of which has a cross-sectional area of 800 mm². The rectangular cross-sectional area of a busbar 2 is 80 mm long and 10 mm wide. To provide the total cross-sectional area, the conductor 1 occupies a rectangular area which is 165 mm long and 30 mm wide.

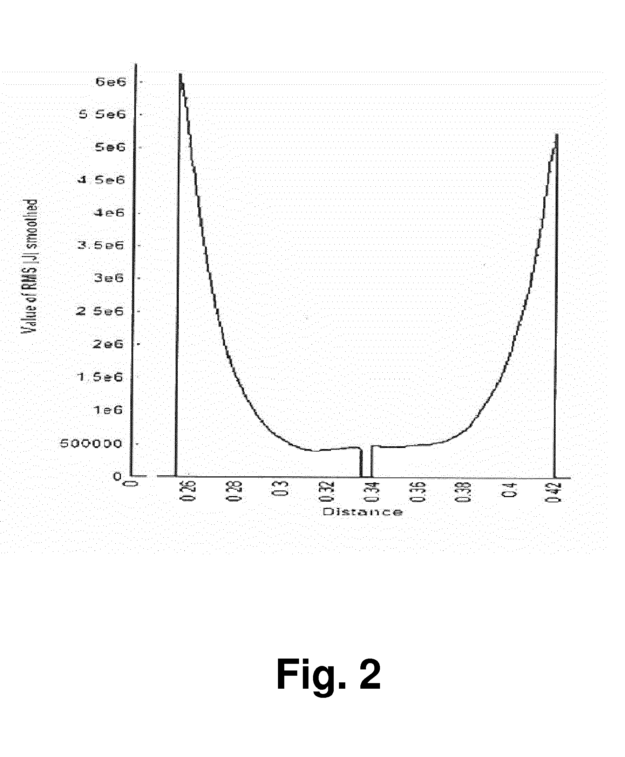

Figure 2 illustrates the current density distribution along a horizontal axis, which runs parallel to the longitudinal extent of the total cross-sectional area of the conductor 1 shown in figure 1. The figure shows that the current density is greatest at outer ends of the conductor 1 and decreases towards the centre.

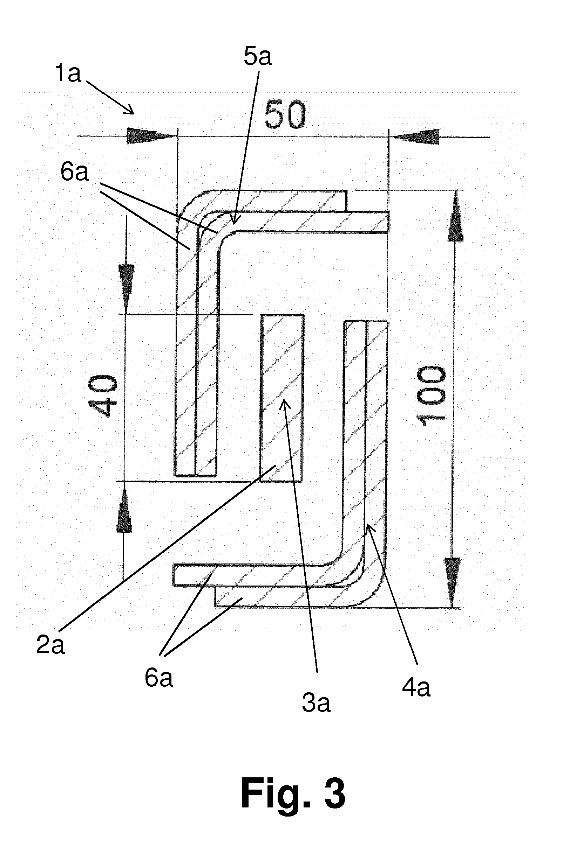

Figure 3 shows a conductor la according to the invention, said conductor comprising at least one inner region 3a, at least two outer regions 4a, 5a and a plurality of busbars 2a, 6a for conducting alternating current, which busbars in each case comprise an electrically conductive material, wherein at least one central busbar 2a is arranged in the inner region 3a and at least one outer busbar 6a is arranged in each case in the outer regions. The geometry of the cross-sectional area of at least one outer busbar 6a is different from the geometry of the cross-sectional area of a central busbar 2a.

Less conductive material is present in the inner region 3a than in the outer regions 4a, 5a. The conductive material is copper, wherein the outer busbars 6a and the central busbar 2a are manufactured from copper.

At least one outer busbar 6a is configured to be L-shaped in cross section. In each case two outer busbars 6a are arranged in at least one outer region 4a, 5a, said outer busbars being in each case configured to be L-shaped in cross section and lying on and/or in one another such that together they form an L. In each case two outer busbars 6a are arranged in two outer regions 4a, 5a, said outer busbars being in each case configured to be L-shaped in cross section and lying on and/or in one another such that together they form an L. The central busbar 2a is configured to be rectangular in cross section.

Figure 3 shows a conductor la according to the invention for a current of 3200 A. Said conductor comprises four outer busbars 6a, which are designed to be L-shaped in cross section. Said outer busbars 6a are bent from four flat coarse copper bars, the originally rectangular cross-sectional area of which was 100 mm long and 5 mm wide. Each two outer busbars 6a which lie on one another and are designed to be L-shaped in cross section form an L-shaped subconductor.

In addition, a central busbar 2a of copper which has a rectangular cross-sectional area of 40 mm long and 10 mm wide, however, is provided. The central busbar 2a forms an inner subconductor.

The total cross-sectional area which is available for the current flow is 2400 mm² and is 25% smaller than that of the conductor 1 shown in figure 1.

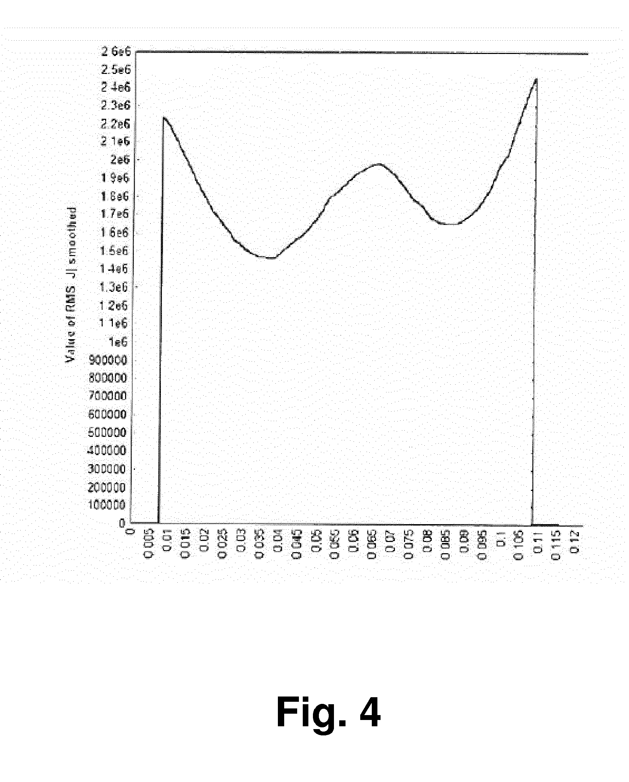

Figure 4 illustrates the current density distribution along the horizontal axis with reference to an L-shaped subconductor as shown in figure 3. The figure shows that the current density values are evenly distributed and exhibit smaller deviations from the maxima and minima of the current density distribution curve. The extent of higher current density values in the interior of the conductor 1a is greater than in the case of the conductor 1.

For interrupters at a current of 5000 A, conductors 1b which comprise six busbars 2b are used at present.

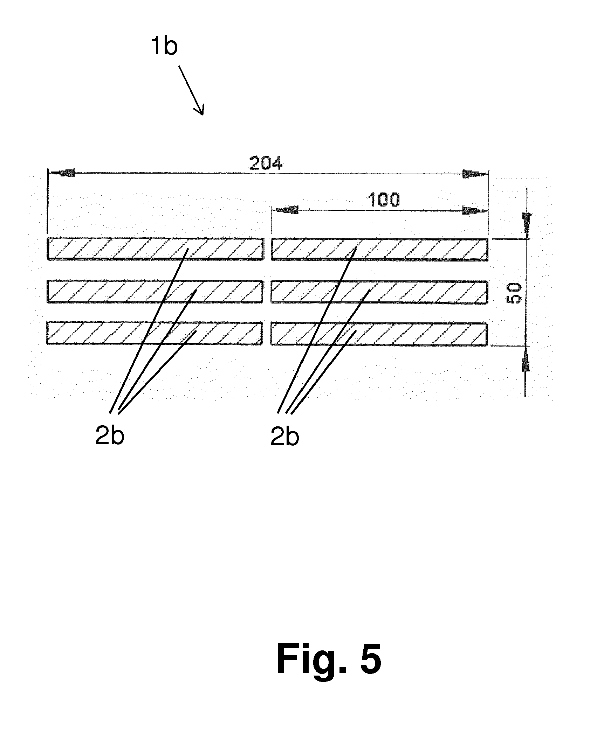

Figure 5 shows a conductor 1b having six busbars 2b and providing a total cross-sectional area of 6000 mm² for the current flow. Six busbars 2b are arranged, each of which has a cross-sectional area of 1000 mm². The rectangular cross-sectional area of a busbar 2b is 100 mm long and 10 mm wide. To provide the total cross-sectional area, the conductor 1b occupies a rectangular area which is 204 mm long and 50 mm wide.

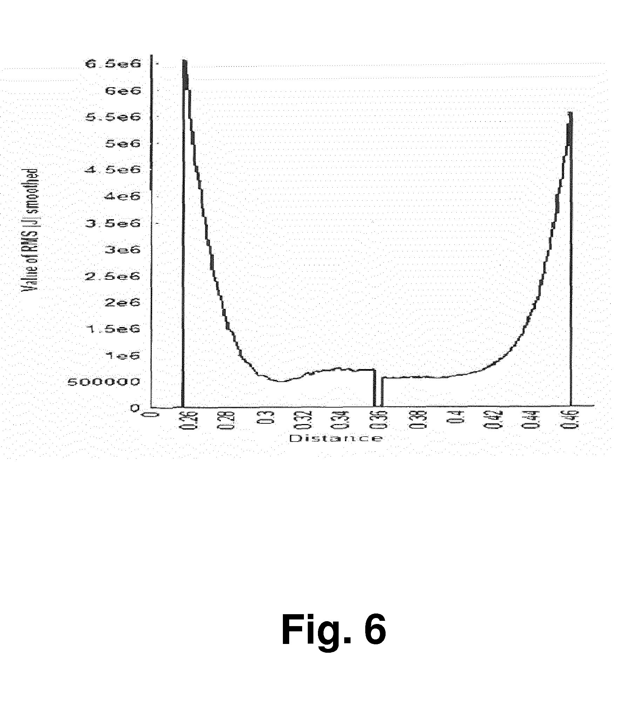

Figure 6 illustrates the current density distribution along the horizontal axis, which runs parallel to the longitudinal extent of the total cross-sectional area of the conductor 1b shown in figure 5.

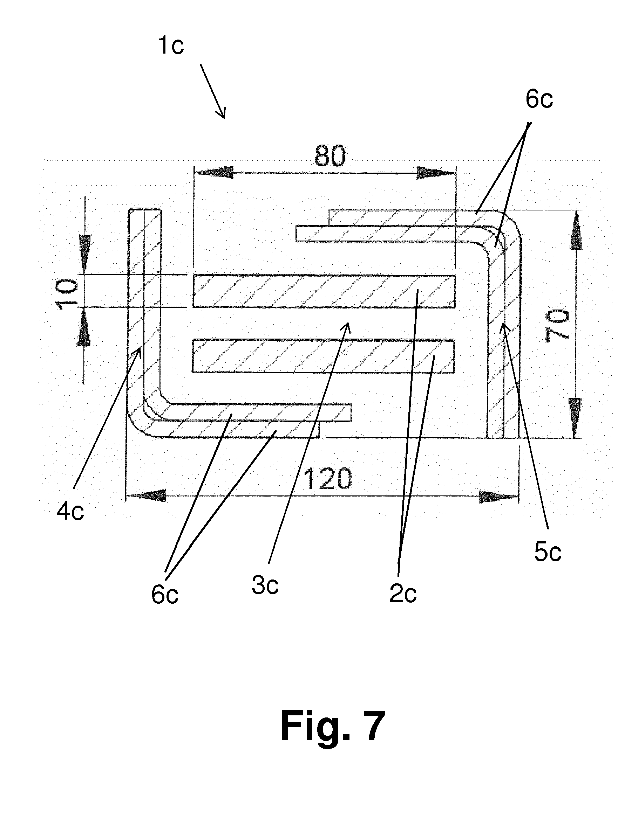

Figure 7 shows a conductor 1c according to the invention, said conductor comprising at least one inner region 3c, at least two outer regions 4c, 5c and a plurality of busbars 2c, 6c for conducting alternating current, which busbars in each case comprise an electrically conductive material, wherein at least one central busbar 2c is arranged in the inner region 3c and at least one outer busbar 6c is arranged in each case in the outer regions. The geometry of the cross-sectional area of at least one outer busbar 6c is different from the geometry of the cross-sectional area of a central busbar 2c.

Less conductive material is present in the inner region 3c than in the outer regions 4c, 5c. The conductive material is copper, wherein the outer busbars 6c and the central busbar 2c are manufactured from copper.

At least one outer busbar 6c is configured to be L-shaped in cross section. In each case two outer busbars 6c are arranged in at least one outer region 4c, 5c, said outer busbars being in each case configured to be L-shaped in cross section and lying on and/or in one another such that together they form an L. In each case two outer busbars 6c are arranged in two outer regions 4c, 5c, said outer busbars being in each case configured to be L-shaped in cross section and lying on and/or in one another such that together they form an L. The central busbar 2c is configured to be rectangular in cross section. Two central busbars 2c are arranged in the inner region 3c.

Figure 7 shows a conductor 1c according to the invention for a current of 5000 A. Said conductor comprises four outer busbars 6c, which are designed to be L-shaped in cross section. Said outer busbars 6c are bent from four flat coarse copper bars, the originally rectangular cross-sectional area of which was 120 mm long and 5 mm wide. Each two outer busbars 6c which lie on one another and are designed to be L-shaped in cross section form an L-shaped subconductor.

In addition, two central busbars 2c of copper which have rectangular cross-sectional area of in each case 80 mm long and 10 mm wide, however, are provided. The two central busbars 2c form an inner subconductor.

The total cross-sectional area which is available for the current flow is 4000 mm² and is 33% smaller than that of the conductor 1b shown in figure 5.

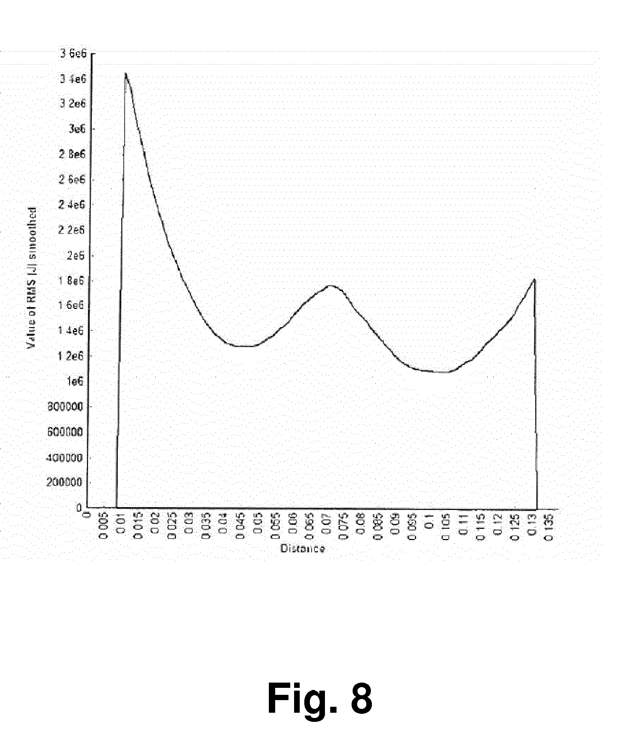

Figure 8 illustrates the current density distribution along the horizontal axis with reference to the L-shaped subconductor shown in figure 7. The figure shows that the current density values are evenly distributed and exhibit smaller deviations from the maxima and minima of the current density distribution curve. The extent of higher current density values in the interior of the conductor 1c is greater than in the case of the conductor 1b.

The conductors according to the invention which are shown here are used in switchgear assemblies, in particular in switchgear assemblies for energy distribution, power distribution or AC distribution.

### List of reference signs

- 1, 1a, 1b, 1c: conductor
- 2, 2a, 2b, 2c: central busbar
- 3a, 3c: inner region
- 4a, 4c: outer region
- 5a, 5c: outer region
- 6a, 6c: outer busbar

## Claims

1. Conductor (1a, 1c) comprising at least one inner region (3a, 3c), at least two outer regions (4a, 4c, 5a, 5c) and a plurality of busbars (2a, 2c, 6a, 6c) for conducting alternating current, which busbars in each case comprise an electrically conductive material, wherein at least one central busbar (2a, 2c) is arranged in the inner region (3a, 3c) and at least one outer busbar (6a, 6c) is arranged in each case in the outer regions (4a, 4c, 5a, 5c),
**characterized in that** the geometry of the cross-sectional area of at least one outer busbar (6a, 6c) is different from the geometry of the cross-sectional area of a central busbar (2a, 2c).

2. Conductor according to Claim 1, **characterized in that** less conductive material is present in the inner region (3a, 3c) than in the outer regions (4a, 4c, 5a, 5c).

3. Conductor according to Claim 1 or 2, **characterized in that** the conductive material is copper, wherein the outer busbars (6a, 6c) and the central busbar (2a, 2c) are manufactured from copper.

4. Conductor according to one of the preceding claims, **characterized in that** at least one outer busbar (6a, 6c) is configured to be L-shaped in cross section.

5. Conductor according to one of the preceding claims, **characterized in that** in each case two outer busbars (6a, 6c) are arranged in at least one outer region (4a, 4c, 5a, 5c), said outer busbars being in each case configured to be L-shaped in cross section and lying on and/or in one another such that together they form an L.

6. Conductor according to one of the preceding claims, **characterized in that** in each case two outer busbars (6a, 6c) are arranged in two outer regions (4a, 4c, 5a, 5c), said outer busbars being in each case configured to be L-shaped in cross section and lying on and/or in one another such that together they form an L.

7. Conductor according to one of the preceding claims, **characterized in that** the central busbar (2a, 2c) is configured to be rectangular in cross section.

8. Conductor according to one of the preceding claims, **characterized in that** two central busbars (2a, 2c) are arranged in the inner region (3a, 3c).

9. A switchgear assembly, in particular a low voltage or medium voltage switchgear assembly, comprising at least one conductor (1a,1c) according to one of the claims 1 to 8.
